# EUROPÄISCHE PATENTANMELDUNG

(11) **EP 3 393 026 A1**
(43) Veröffentlichungstag der Anmeldung: **24.10.2018**
(21) Anmeldenummer: 18168422.6
(22) Anmeldetag: 20.04.2018
(51) Int. Cl.: H02M 1/12, H02M 5/458

(54) **WINDENERGIEANLAGE MIT ÜBER EINE VERBINDUNGSLEITUNG ANGESCHLOSSENEM UMRICHTER**

(30) Priorität: 21.04.2017 DE 102017003876
(71) Anmelder: Senvion GmbH, 22297 Hamburg (DE)
(72) Erfinder: Letas, Heinz-Hermann, 24796 Bovenau (DE)
(74) Vertreter: Glawe, Delfs, Moll

(57) **Zusammenfassung**

Die Erfindung betrifft eine Windenergieanlage mit einem in einer Gondel (11) angeordneten Generator (14) und einem über eine Verbindungsleitung (15) angeschlossenen Umrichter (3). Insbesondere ist der Umrichter (3) gondelfern angeordnet und über eine lange Verbindungsleitung (15) an den Generator (14) in der Gondel (11) angeschlossen. Um die Windenergieanlagen so zu verbessern, dass die Filter weniger kritisch sind, sind ferner vorgesehen ein mit beiden Wechselrichtern (31, 32) synchroner Träger zur Ansteuerung der Stromventile (35, 36) mit jeweils einer Zyklenlage, ein Relativlage-Detektor (5), der dazu ausgebildet ist, die Zyklenlage für beide Wechselrichter (31, 32) zu ermitteln und deren relative Lage zueinander zu bestimmen, und ein Zyklenlageschieber (6), der mit dem Relativlage-Detektor zusammenwirkt und ausgebildet ist zur Verschiebung der Zyklenlage zumindest eines der Wechselrichter (31, 32) abhängig von der ermittelten relativen Lage.

## Beschreibung

Die Erfindung betrifft eine Windenergieanlage mit einem in einer Gondel angeordneten Generator und einem über eine Verbindungsleitung angeschlossenen Umrichter. Insbesondere ist der Umrichter gondelfern angeordnet und über eine lange Verbindungsleitung an den Generator in der Gondel angeschlossen.

Bei modernen Windenergieanlagen mit Umrichter sind zwei grundlegend verschiedene Bauarten bekannt. Die eine Bauart sieht eine gemeinsame Anordnung von Generator und Umrichter in der Gondel vor. Hierbei sind entweder der Generator und der Umrichter miteinander verblockt oder über eine sehr kurze Verbindungsleitung miteinander verbunden. Dies bringt den Vorteil einer kurzen Niedervolt-Verbindung mit sich. Ferner ist die Anordnung kompakt. Jedoch ist die Anordnung des Umrichter in der Gondel aus konstruktiven Gründen häufig unvorteilhaft.

Die andere Bauart sieht eine verteilte Anordnung von Generator und Umrichter vor, wobei der Umrichter nicht in der Gondel, sondern gondelfern im Turm oder gar am Turmfuß angeordnet ist. Diese Anordnung kann konstruktive Vorteile für sich buchen. Zum einen ist das beträchtliche Gewicht des Umrichters nicht oben am Kopf des Turms, sondern weiter unten angeordnet. Zum anderen ist die Verbindungsleitung nunmehr eine reine Niedervolt-Leitung, so dass dementsprechend im Turminneren die Einhaltung der weniger strengen Vorschriften für den Umgang mit Niedervolt-Anlagen gelten (anders als die erheblich strengeren Vorschriften für den Umgang mit Mittelspannungsanlagen, wie es sonst erforderlich wäre). Diesem regulatorischen Vorteil steht als Nachteil gegenüber, dass durch die vom Umrichter aufgeprägten blockförmigen Spannungen es in Verbindung mit parasitären Kapazitäten zu Wanderwellen auf der Verbindungsleitung sowie dann auch in der Generatorwicklung kommen kann, die zu Überspannungen und Resonanzen führen. Diese können zu Schädigungen führen. Es wird daher versucht, sie durch Spannungsfilter zu vermindern.

In der Praxis bereitet jedoch bei Windenergieanlagen mit gondelfern angeordnetem Umrichter die Auslegung besagter Filter häufig Probleme. Denn sie müssen verschiedene Ziele bedienen. Zum einen geht es darum, die Flankensteilheit zu begrenzen und Überspannungen gering zu halten. Ferner soll das Einschwingverhalten möglichst gut gedämpft sein. Dies alles soll erreicht werden, ohne große Verluste zu produzieren. Diese Anforderungen sind in der Praxis meist konträr. Die Auslegung der Filter ist daher schwierig. Über dem Betriebsbereich gesehen sind sie häufig nicht robust und/oder weisen hohe Verluste auf.

Der Erfindung liegt die Aufgabe zu Grunde, die Windenergieanlagen so zu verbessern, dass die Filter weniger kritisch sind.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Generator in einer Gondel, der von einem Windrotor angetrieben ist, einem Umrichter, der mit dem Generator zusammenwirkt zur Erzeugung elektrischer Leistung, einer Verbindungsleitung zwischen Generator in der Gondel und dem Umrichter, der vorzugsweise gondelfern angeordnet ist, wobei der Umrichter einen generatorseitigen und einen netzseitigen Wechselrichter umfasst, deren Stromventile mittels einer Schaltfrequenz zyklisch angesteuert sind, sind erfindungsgemäß vorgesehen ein mit beiden Wechselrichtern synchroner Träger zur Ansteuerung der Stromventile mit jeweils einer Zyklenlage, ein Relativlage-Detektor, der dazu ausgebildet ist, die Zyklenlage für beide Wechselrichter zu ermitteln und deren relative Lage zueinander zu bestimmen, und ein Zyklenlageschieber, der mit dem Relativlage-Detektor zusammenwirkt und ausgebildet ist zur Verschiebung der Zyklenlage eines der Wechselrichter abhängig von der ermittelten relativen Lage.

Durch die Verschiebung der relativen Zyklenlage kann somit eine erhebliche Verringerung von Gleichtaktspannungen auf der Verbindungsleitung erreicht werden. Damit wird die Anregung zu Schwingungen und Wanderwellen entsprechend ebenso verringert. Es hat sich gezeigt, dass mit der erfindungsgemäßen Maßnahmen eine Verringerung der Spannung der Gleichtaktschwingungen um 2/3 erfolgen kann. Filter- und Spannungsverluste werden so - nicht zuletzt wegen des quadratischen Zusammenhangs zwischen Spannung und Leistung - deutlich verringert. Die Filter brauchen daher nicht mehr so aggressiv ausgelegt zu werden, und werden damit robuster und weisen geringere Verluste auf. Es wird so die Verwendung einfacher, kleinerer Filter ermöglicht. Zudem sind die Verluste verringert.

Der Umrichter kann als Vollumrichter (insbesondere für Käfigläuferasynchrongeneratoren oder Synchrongeneratoren) oder als Teilumrichter (insbesondere für doppelt gespeiste Asynchrongeneratoren) ausgeführt sein.

Zweckmäßigerweise ist der Relativlage-Detektor so ausgebildet, den Zyklenlageschieber nur dann anzusteuern, wenn die Relativlage außerhalb eines Intervalls ist. Hierbei sind die Grenzen des Intervalls vorzugsweise dynamisch bestimmt.

Vorzugsweise ist ein Selektor vorgesehen, der mit Vorteil dynamisch auswählt, welcher der beiden Wechselrichter der Umrichters bezüglich seiner Zyklenlage verschoben wird. Die Einwirkung auf lediglich einen der beiden Wechselrichter ermöglicht eine direktere Kontrolle und vermeidet im Übrigen die Gefahr von Regelschwingungen durch unerwünschte Mitkopplung. Zweckmäßigerweise wird der Selektor belastungsgesteuert betätigt. Das kann mit Vorteil so gesteuert sein, dass abhängig von einem Belastungsmaß derjenige Wechselrichter von dem Selektor ausgewählt ist, der das niedrigere Belastungsmaß aufweist. Dies hat den Vorteil, dass der weniger belastete der beiden Wechselrichter zu der Verschiebung herangezogen wird. Zweckmäßigerweise kann als Belastungsmaß die Spannung an den beiden Wechselrichtern vorgesehen sein, wobei dann der Wechselrichter vom Selektor ausgewählt ist, der die niedrigere Spannung aufweist; alternativ kann auch ein Zeitparamater als Belastungsmaß fungieren, beispielsweise eine Intervalldauer eines Intervall, das zwischen Minimalwert und Maximalwert aufgespannt ist, wie nachfolgend noch näher erläutert werden wird.

Mit Vorteil ist eine Phasensortiereinheit vorgesehen, welche in Bezug auf die Phasen des Wechselrichters nach ihrer Amplitude zu sortieren. Zweckmäßigerweise ist für jeden der beiden Wechselrichter solche Transformationseinheit vorgesehen. Die Transformationseinheit ordnet auf diese Weise die Phasen hinsichtlich ihres Betrags und ermöglicht so eine einfachere Bestimmung der Zyklenlage. Mittels eines Intervallbildungsmoduls kann zweckmäßigerweise aus der minimalen und maximalen Phase das Intervall gebildet werden.

Zweckmäßigerweise ist eine Kreuzvergleichseinheit vorgesehen, die die Lagevektoren der beiden Wechselrichter miteinander über Kreuz vergleicht. Unter "kreuzweise" wird hierbei verstanden, dass ein Wert für die mittlere Phase des einen Wechselrichter verglichen wird mit Werten für den Minimal- und dem Maximalwert des anderen Wechselrichters. Es wird darauf geprüft, ob der mittlere Wert in dem durch den Minimalwert und Maximalwert aufgespannten Intervall liegt. Ist das der Fall, wird ein entsprechendes Signal ausgegeben, um die Zyklenlage desjenigen Wechselrichters zu verändern, dessen Werte die Grenzen des Intervalls bestimmen. Damit wird durch die Verschiebung der Zyklen dieses Wechselrichters erzwungen, dass die Bedingung des In-das-Intervall-fallen erfüllt wird. Auf diese Weise wird ein überdeckender Betrieb der beiden Wechselrichter sichergestellt. Dies ist, wie die Erfindung erkannt hat, günstig für eine Verringerung der Gleichtaktspannungen.

Die Erfindung erstreckt sich ferner auf einen entsprechenden Umrichter für Windenergieanlagen. Ferner erstreckt sich die Erfindung auf ein entsprechendes Verfahren.

Zur näheren Beschreibung wird auf vorstehende Ausführungen zu der erfindungsgemäßen Windenergieanlage verwiesen.

Die Erfindung wird nachfolgend unter Bezugnahme auf die beigefügte Zeichnung anhand eines Ausführungsbeispiels erläutert. Es zeigen:
- Fig. 1.: eine schematische Ansicht einer Windenergieanlage gemäß einem Ausführungsbeispiel der Erfindung;
- Fig. 2.: ein Schaltbild eines Umrichters;
- Fig. 3.: Diagramme zu einem Ansteuersignal des Umrichters;
- Fig. 4.: ein Blockschaltbild für eine Ansteuerung des Umrichters;
- Fig. 5.: ein Blockschaltbild zu einem Phasensortierer;
- Fig. 6.: ein Blockschaltbild zu einem Relativlage-Detektor;
- Fig. 7.: ein Diagramm zu Zyklenlagen;
- Fig. 8.: Diagramme zur Ansteuerung von Stromventilen mit und ohne Gleichtakt-Optimierung; und
- Fig. 9.: Diagramme zur Ansteuerung von Stromventilen des Umrichters mit unterschiedlicher Spannung.

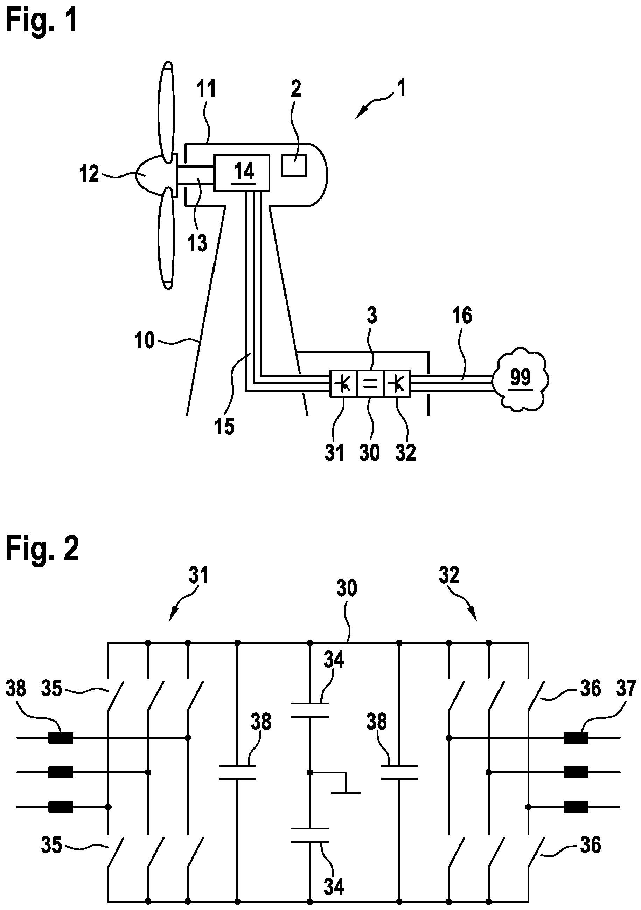

Zur Erläuterung eines Ausführungsbeispiels für die Erfindung wird zuerst Bezug genommen Figur 1. Sie zeigt eine in ihrer Gesamtheit mit der Bezugsziffer 1 bezeichnete Windenergieanlage gemäß einem Ausführungsbeispiel der Erfindung.

Die Windenergieanlage 1 umfasst einen Turm 10, an dessen oberem Ende eine Gondel 11 in Azimutrichtung schwenkbar angeordnet ist. An einer Stirnseite der Gondel 11 ist ein Windrotor 12 drehbeweglich angeordnet. Er treibt über eine Rotorwelle 13 einen in der Gondel 11 angeordneten Generator 14 an. In der Gondel 11 ist ferner eine Betriebssteuerung 2 vorgesehen, welche den Betrieb der Windenergieanlage 1 im gesamten kontrolliert.

Am Fuß des Turms 10 ist ein Umrichter 3 angeschlossen. Er kann als Vollumrichter oder als Teilumrichter ausgeführt sein. Nachfolgende Erläuterung erfolgt am Beispiel der Ausführung als Vollumrichter, wobei der Generator 14 als Käfigläufer-Asynchrongenerator ausgeführt ist (andere Ausführungsarten sind auch möglich). Der Umrichter 3 umfasst einen generatorseitigen Wechselrichter 31, einen netzseitigen Wechselrichter 32 sowie einen der dazwischen angeordneten Gleichspannungszwischenkreis 30 (siehe Figur 2). Der Umrichter 3 kann an sich an beliebiger Stelle der Windenergieanlage angeordnet sein, beispielsweise in der Gondel 11 zusammen mit dem Generator 14 oder abgesetzt von der Gondel ("gondelfern"), wie in dem hier erläuterten Ausführungsbeispiel. Dabei ist der Umrichter 3 mit dem Generator 14 über eine Verbindungsleitung 15 verbunden, welche von der Gondel 11 ausgehend durch den gesamten Turm 10 nach unten verläuft bis zum Anschluss an den Umrichter 3. Über eine an den netzseitigen Wechselrichter 32 angeschlossene Anschlussleitung 16 wird die von dem Generator 14 erzeugte und vom Umrichter 3 umgewandelte elektrische Leistung schließlich an ein Netz 99 abgegeben.

Der grundsätzliche Aufbau des Umrichters 3 ist, wie an sich bekannt, in Figur 2 vereinfacht dargestellt. Der Umrichter 3 umfasst den linksseitig dargestellten generatorseitigen Wechselrichter 31 und den rechtseitig dargestellten netzseitigen Wechselrichter 32. Sie sind verknüpft durch einen Gleichspannungszwischenkreis 30. Dieser weist eine Speicherkapazität auf, die in dem dargestellten Ausführungsbeispiel als zwei in Reihe geschaltete Kondensatoren 34 ausgeführt ist. Zwischenkreisseitig sind an dem generatorseitigen Wechselrichter 31 sowie an dem netzseitigen Wechselrichter 32 je ein Glättungskondensator 38 vorgesehen.

Der netzseitige Wechselrichter 32 weist drei parallele Phasenstränge auf, die jeweils zwei in Reihe geschaltete Stromventile 36 umfassen, an deren mittleren Verknüpfungspunkt jeweils eine der Phasen angeschlossen ist über eine Filterimpedanz 37. Diese Stromventile 36 in den drei Phasensträngen werden über (nicht dargestellte) Signalleitungen angesteuert, wobei die entsprechenden Steuersignale als A1, A2 und A3 für die drei Phasen des netzseitigen Wechselrichters 32 bezeichnet sind.

Entsprechend weist der generatorseitige Wechselrichter 31 ebenfalls drei parallele Phasenstränge auf, die jeweils ebenfalls zwei in Reihe geschaltete Stromventile 35 umfassen, an deren mittleren Verknüpfungspunkt jeweils eine der Phasen angeschlossen ist über eine Filterimpedanz 38. Diese Stromventile 35 werden ebenfalls über (nicht dargestellte) Signalleitungen angesteuert, wobei die entsprechenden Steuersignale als B1, B2 und B3 für die drei Phasen des generatorseitigen Wechselrichters 31 bezeichnet sind.

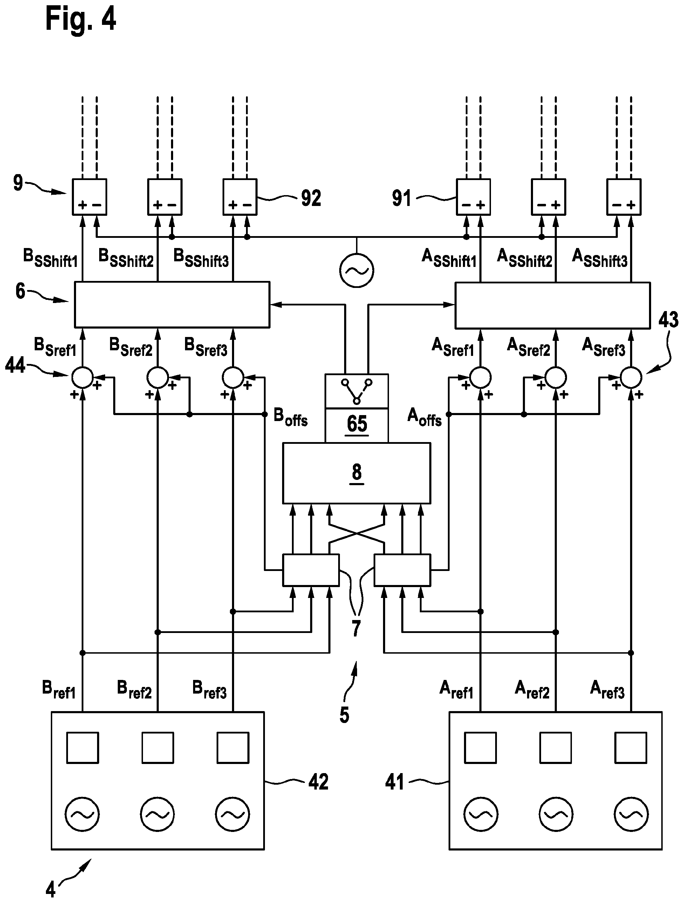

Die Steuersignale A1, A2 und A3 sowie B1, B2 und B3 werden von einem zur Steuerung des Umrichters 3 verwendeten Pulsweitenmodulator 4 bereitgestellt (siehe Figur 4). In je einem Grundblock 41, 42 wird für die drei Phasen jeweils eine Schaltfrequenz erzeugt. Deren Frequenz und Amplitude ist abhängig von einem mittels der Betriebssteuerung 2 für jeden der beiden Wechselrichter 31, 32 erzeugten Steuersignal. Sie wird für die drei Phasen mit unterschiedlichem Phasenversatz erzeugt, nämlich um 120° versetzt. Um eine digitale Weiterverarbeitung zu ermöglichen, werden die somit frequenzgleichen und phasenversetzten Signale jeweils einem Abtasthalteglied zugeführt und dann aus dem Grundblock 41, 42 ausgegeben. Diese Signale werden als Aref1, Aref2 und Aref3 bzw. Bref1, Bref2 und Bref3 bezeichnet.

Diese Signale sind angelegt an einen Eingang einer Offseteinheit 43, 44. An deren anderen Eingang ist jeweils ein Offset-Signal Aoffs und Boffs angelegt, wie später noch näher erläutert werden wird. Die somit erzeugten Signale werden als ASrefl, ASref2 und ASref3 bzw. BSref1, BSref2 und BSref3 bezeichnet. Sie sind angelegt an einen Eingang eines Zyklenschieber 6, der dazu ausgebildet ist mindestens eines der Signale zyklisch in Bezug auf die übrigen Signale zu verschieben. Die Ausgangssignale des Zyklenschieber 6 werden dementsprechend bezeichnet als ASShift1, ASShift2 und ASShift3 bzw. BSShift1, BSShift2 und BSShift3.

Die so gewonnenen Steuersignale sind angelegt an eine Modulationsstufe 9 und werden dort einem von einer Modulationsquelle 90 bereitgestellten Trägersignal (im dargestellten Ausführungsbeispiel 2 kHz) aufmoduliert. Die eigentlichen Modulationsstufen sind mit der Bezugsziffer 91, 92 bezeichnet. Sie geben jeweils ein komplementäres Paar von Ausgangssignalen auf, wobei jedes Paar an die beiden hintereinander geschalten Stromventile in den Phasensträngen des Umrichters 3 als Steuersignal angelegt ist.

Erfindungsgemäß vorgesehen sind ein Zyklenlagedetektor 5 sowie der bereits erwähnte Zyklenschieber 6. Der Zyklenlagedetektor 5 umfasst einen Phasensortierer 7 sowie eine Kreuzvergleichseinheit 8. Ferner ist ein Selektor 65 für den Zyklenschieber 6 vorgesehen.

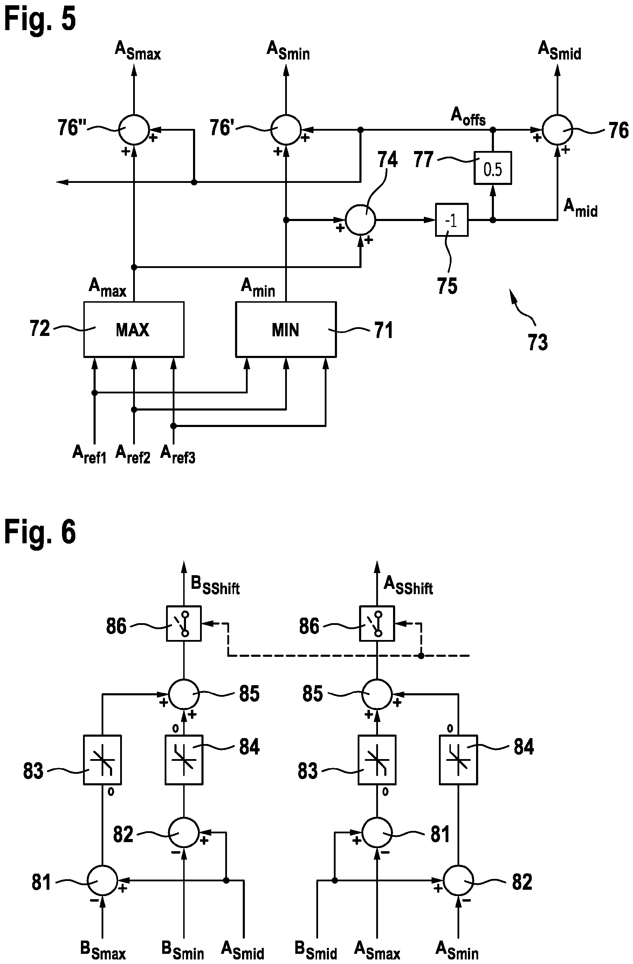

Für eine detailliertere Erläuterung des Phasensortierers 7 und der Kreuzvergleichseinheit 8 wird auf die Figuren 5 und 6 verwiesen. Der Phasensortierer 7 ist dazu ausgebildet, die Ansteuersignale für die drei Phasen nach ihrer Größe zu sortieren. Die drei Signale werden also umsortiert, um so das mit der kleinsten Amplitude Amin bzw. Bmin, dasjenige mit einer mittelgroßen Amplitude Amid bzw. Bmid sowie das mit der größten Amplitude Amax bzw. Bmax zu bestimmen. Zur Bestimmung der Signale mit der kleinsten Amplitude und zur Bestimmung der Signale mit der größten Amplitude sind jeweils ein Minimumsbildner 71 bzw. ein Maximumsbildner 72 vorgesehen. An ihren Eingängen sind jeweils die drei ursprünglichen Signale angelegt, und an ihren Ausgängen wird das kleinste bzw. größte ausgegeben. Der Aufbau eines solchen Minimumsbildners und Maximumsbildners ist an sich bekannt und braucht daher vorliegend nicht näher erläutert zu werden. Nachfolgend sei beispielhaft für den Zweig mit dem netzseitigen Wechselrichter A der Aufbau derjenigen Einheit 73 erläutert, welche das Signal mittlerer Größe Amid identifiziert. Diese Einheit 73 weist an ihrem Eingang ein Summationsglied 74 auf, an dessen Eingänge das von dem Minimumsbildner bzw. Maximumsbildner ermittelte minimal und maximal Signal Amin bzw. Amax angelegt sind. Der Ausgang des Summationsglieds 74 ist angelegt an einen Inverter 75 dessen Ausgang wiederum an ein einen Eingang eines Summationsglieds 76 angelegt ist. Das ist der Wert des mittelgroßen Signals Amid.

Ferner ist der Ausgang des Inverters 75 angelegt an einen Multiplizierer 77, der eine Multiplikation mit dem Wert 0,5 durchführt. Damit wird ein Offset-Signal Aoffs gebildet.

Der Ausgang des Multiplizierers ist an den anderen Eingang des zweiten Summationsgliedes 76 angelegt. Durch Summation wird das um den Offsetwert korrigierte Ausgangssignal für den mittleren Wert ASmid gebildet. Entsprechende weitere zweite Summationsglieder 76', 76" sind auch für die Signale für das kleinste und größte Signal Amin, Amax vorgesehen, sodass auf diese Weise unter Berücksichtigung des Offsetsignals Signale ASmin, ASmax gebildet werden. - Für die drei Ansteuersignale des generatorseitigen Wechselrichters 32 ist eine entsprechende Signalverarbeitung vorgesehen. Sie generiert das entsprechende Signaltrio BSmin, BSmid und BSmax für den generatorseitigen Wechselrichter 32.

Die beiden Signaltrios ASmin, ASmid, ASmax bzw. BSmin, BSmid und BSmax für die Ansteuerung des netzseitigen bzw. generatorseitigen Wechselrichters 31, 32 sind angelegt an einen Eingang der Kreuzvergleichseinheit 8. Die Kreuzvergleichseinheit 8 ist dazu ausgebildet zu prüfen, inwieweit der mittlere Wert des EINEN Signaltrios in dem Intervall liegt, dass durch den Minimalwert und Maximalwert des jeweiligen ANDEREN Signaltrios aufgespannt ist. Funktional umfasst die Kreuzvergleichseinheit 8 somit einen Intervallbildner einerseits sowie eine Einheit zum Überprüfung der Überdeckung andererseits. Aufbau und Funktionsweise der Kreuzvergleichseinheit 8 wird nunmehr unter Bezugnahme auf Figur 6 erläutert. Die Kreuzvergleichseinheit weist zwei Zweige mit jeweils drei Eingängen auf. Nachfolgend sei der Zweig für die Ansteuerung des generatorseitigen Wechselrichters 32 zur Generierung des Signals BShift erläutert.

Die Signale BSmin und BSmax sind jeweils angelegt an einen negativen Eingang eines Differenzgliedes 81, 82 am Eingang des Zweigs der Kreuzvergleichseinheit 8 angelegt. An den anderen, positiven Eingang des Differenzglieds 81, 82 ist der mittlere Wert des anderen Signaltrios angeschlossen, also der mittlere Wert der zu dem anderen Wechselrichter gehört. Damit ist ein Intervallbildungsmodul gebildet. Vorliegend handelte sich also um das Signal ASmid. Die Differenz aus dem Vergleich zwischen ASmid und BSmax ist angelegt an ein Begrenzungsmodul 83, welches eine Begrenzung auf positive Werte vornimmt. Das Ausgangssignal des Begrenzungsmoduls 83 ist angelegt an einen ersten Eingang eines dritten Summationsglieds 85. Die Differenz aus dem Vergleich zwischen ASmid und BSmin ist angelegt an ein Begrenzungsmodul 84, welches eine Begrenzung auf negative Werte vornimmt. Das Ausgangssignal des Begrenzungsmoduls 84 ist angelegt an einen dritten Eingang des dritten Summationsglieds 85. Aus der Summe dieser beiden Werte bildet das dritte Summationsglied 85 den Wert BSshift für die Verschiebung des Steuersignals für den generatorseitigen Wechselrichter 32. Die Elemente 83, 84, 85 fungieren als Überdeckungsmodul und wirken so zusammen, dass sie prüfen, ob der Wert ASmid in das durch BSmin und BSmax definierte Intervall fällt. Ist das nicht de Fall, wird das Signal BSshift generiert. Dieses Signal ist angelegt an ein Abschaltelement 86, welches bei Bedarf eine Verschiebung unterdrücken kann. - Der Zweig für den netzseitigen Wechselrichter ist auf der rechten Seite in Figur 6 dargestellt und entsprechend aufgebaut. Es wird auf vorstehende Erläuterung verwiesen, welche hier entsprechend anwendbar ist.

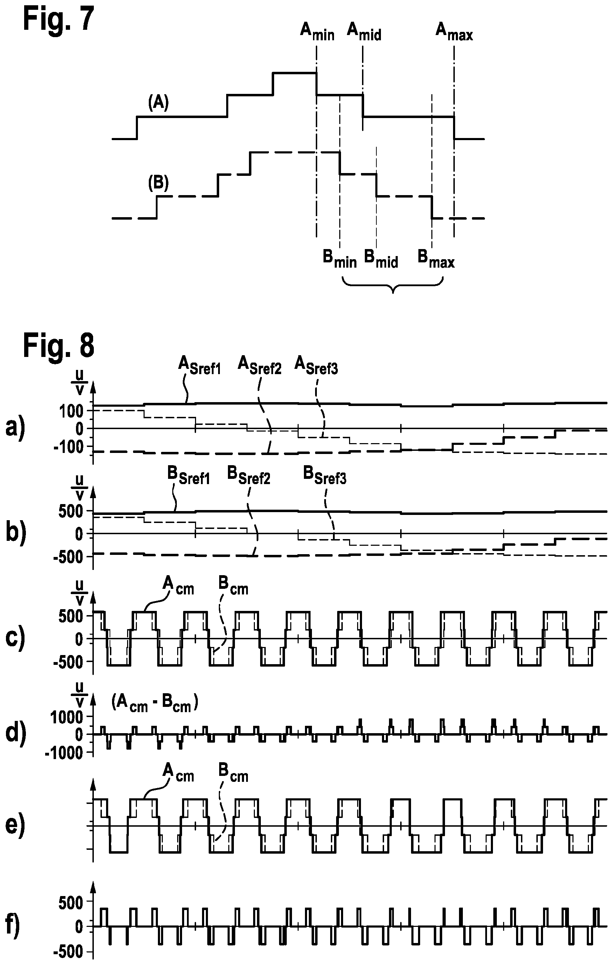

Dieser Übergang von den drei nummerierten Steuersignalen A1ref, A2ref, A3ref auf die nach Amplitudengröße sortierten Signal Amax, Amin, Amid sowie entsprechend von den Signalen Bref1, Bref2, Bref3 zu Bmax, Bmin, Bmid sind in Figur 8 veranschaulicht. Die durchgezogene Linie (A) stellt die Schaltzyklen des netzseitigen Wechselrichters 31 dar. Die langgestrichelte Linie (B) zeigt die Schaltzyklen des generatorseitigen Wechselrichters. Die Umsortierung erfolgt durch den Phasensortierer 7. Auf Grundlage von dessen Umsortierung nach Maximum, Minimum und Mittel-Signal arbeitet die Kreuzvergleichseinheit 8. Sie prüft, ob das Bmid in das Intervall fällt, das durch die Maximalwerte Amin, Amax aufgespannt ist - das ist, wie Figur 8 zeigt, der Fall. Weiter prüft sie, ob das Signal Amid in das Intervall, das durch die Maximalwerte Bmin, Bmax aufgespannt ist (s. die horizontale geschweifte Klammer am unteren Bildrand von Figur 8). Das ist vorliegend ebenfalls der Fall. Es wird also die relative Zyklenlage der Ansteuerung der beiden Wechselrichter verglichen. Wäre die Situation so, dass das Signal Amid nicht in das Intervall zwischen Bmin und Bmax fiele, dann wäre die Ansteuerung ungünstig. Es läge dann also Amid entweder links oder rechts der horizontalen geschweiften Klammer. Die Kreuzvergleichseinheit 8 würde dann ein Verschiebungssignal für die Ansteuerung des generatorseitigen Wechselrichters 32 bestimmen, wodurch alle Werte von B (also Bmin, Bmax und Bmid) so weit verschoben würden, dass Amid in das nunmehr verschobene Intervall fällt und somit Überdeckung hergestellt wird.

Somit bildet die Kreuzvergleichseinheit 8 auf Basis der beiden Signaltrios einen Verschiebungswert, der als Eingangssignal für den Zyklenlageschieber 6 dient. Es wird jeweils ein Verschiebungswert für den generatorseitigen Wechselrichter 32 und für den netzseitigen Wechselrichter 31 gebildet. Es wird jedoch in der Regel nur ein Signal verwendet. Welches verwendet wird, wird durch den Selektor 65 bestimmte. Dieser prüft das Spannungsniveau der beiden Wechselrichter ein 31, 32 und leitet das Verschiebungssignal auf denjenigen mit der kleineren Spannung. Grundsätzlich kann der Selektor 65 als eine eigenständige Einheit ausgeführt sein. Es hat sich jedoch bewährt, ihn mit der Kreuzvergleichseinheit 8 integriert auszuführen. Dies ist vorliegend so vorgesehen. Durch die einseitige Begrenzung auf positive sind negative Werte in den Begrenzungsgliedern 83, 84 wird erreicht, dass ein Verschiebungssignal nur dann entstehen kann, wenn es sich bei dem betroffenen Zweig um denjenigen des Wechselrichters mit der niedrigeren Spannung handelt. Auf diese Weise ist der Selektor 65 in die Kreuzvergleichseinheit 8 integriert.

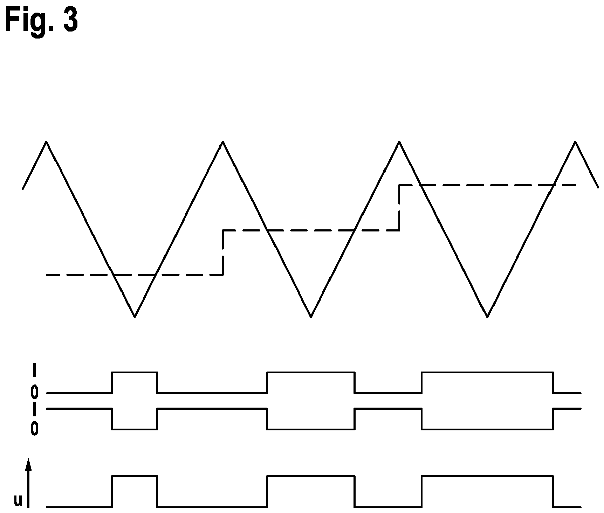

Die Grundzüge der Ansteuerung des Umrichters 3 mittels des gemäß Figur 4,5 und 6 generierten Signals sind in den Figuren 3 und 7 dargestellt. Figur 3 zeigt hierbei die Grundlagen am Beispiel einer Pulsweitenmodulation für eine Phase. Die im oberen Bereich dargestellte Dreieckschwingung ist diejenige des Trägersignals. Dieses wird abhängig von dem durch gestrichelte Linie dargestellten Steuersignal moduliert. Die sich damit ergebenden Schaltfrequenztakte sind mit den beiden Linien unterhalb der Dreieckschwingung dargestellt. Sie zeigen den Schaltzustand der beiden Stromventile in einem Phasenzweig, wobei die obere Linie für das obere Stromventil und die untere Linie für das untere Stromventile (vergleiche Figur 2) steht. Die sich dann am Ausgang für die entsprechende Phase einstellende Spannung ist in der untersten Linie dargestellt. Man erkennt, dass mit steigender Steuerspannung die Weite des Pulses für das Einschaltsignal I zunimmt. Dies ist das Konzept der Pulsweitenmodulation.

Es wird nun Bezug genommen auf Figur 8. Sie zeigt in ihren oberen Diagrammen Werte für eine übliche in Ansteuerung der Wechselrichter 31, 32 ohne erfindungsgemäße Phasenverschiebung. Das Diagramm a) zeigt Werte für ASref1 (durchgezogene Linie), ASref2 (lang gestrichelte Linie) und ASref3 (kurz gestrichelte Linie). Das Diagramm b) zeigt entsprechend Werte für BSref1 (durchgezogene Linie), BSref2 (lang gestrichelte Linie) und BSref3 (kurz gestrichelte Linie). Das Diagramm c) zeigt die Gleichtaktspannung Acm für den netzseitigen Wechselrichter 31 (durchgezogene Linie) und Bcm für den generatorseitigen Wechselrichter 32 (gestrichelte Linie). Die sich durch unterschiedliche Schaltzyklen ergebende Gleichtakt-Differenzspannung Acm - Bcm sind in Diagramm d) dargestellt. Man erkennt eine Vielzahl scharfer Spikes, die Spannungen bis zu +/-800 V erreichen.

Unter Nutzung der erfindungsgemäßen Zyklusverschiebung ändert sich die Zyklenlage, mit welcher die Wechselrichter 31, 32 angesteuert werden. Die sich hierbei ergebenden Gleichtaktspannung Acm für den netzseitigen Wechselrichter 31 (durchgezogene Linie) und Bcm für den generatorseitigen Wechselrichter 32 (gestrichelte Linie) sind im Diagramm e) dargestellt. Die Unterschiede mögen auf den ersten Blick gering erscheinen. Betrachtet man die Differenz zwischen den beiden jedoch genauer, wie sie im Diagramm f) dargestellt ist, so wird klar, dass nunmehr eine beträchtliche Reduktion erreicht werden konnte. Es ist zu beachten, dass das Diagramm f) anders skaliert ist. Man erkennt, dass die Differenz-Gleichtaktspannung nunmehr kaum noch +/- 400 V erreicht, mithin also nur noch die Hälfte verglichen mit dem in den Diagramm c), d) dargestellten Szenario ohne die Erfindung. Eine Halbierung der Spannung führt zu einem leistungsmäßigen Absinken von Störungen aufgrund der Gleichtaktspannungen auf ein Viertel des Ausgangswerts. Das ist eine beträchtliche Reduktion.

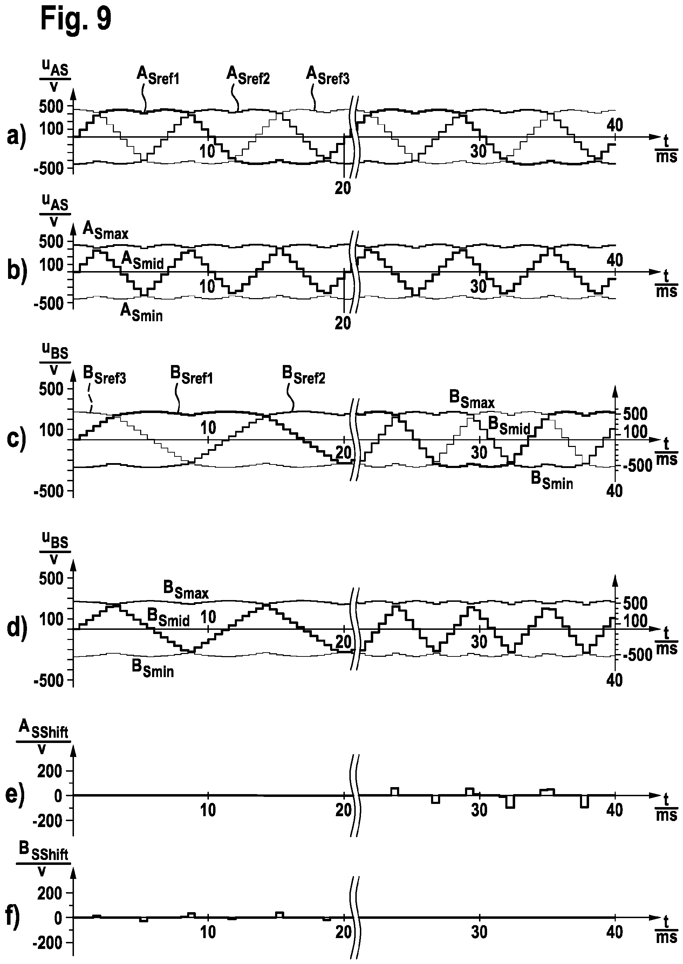

Es wird nunmehr Bezug genommen auf die Figur 9 sie zeigt in der linken und rechten Bildhälfte zwei verschiedene Situationen. In der linken Bildhälfte ist dargestellt ein Betrieb des generatorseitigen Wechselrichters 32 mit einer geringeren Spannung als die des netzseitigen Wechselrichters 31. In der rechten Bildhälfte weist hingegen der generatorseitige Wechselrichter eine höhere Spannung (und Frequenz) auf. Das Diagramm a) zeigt Werte für ASref1 (durchgezogene Linie), ASref2 (punktstrichlierte Linie) und ASref3 (gestrichelte Linie). Das Diagramm b) zeigt die Phasen nunmehr aufgeschlüsselt nach der größten ASmax (punktstrichlierte Linie), der mittleren ASmid (durchgezogene Linie) und der kleinsten ASmin (gestrichelte Linie). Das Diagramm c) zeigt entsprechend die ursprünglichen Werte für BSref1 (durchgezogene Linie), BSref2 (lang gestrichelte Linie) und BSref3 (kurz gestrichelte Linie). Das Diagramm d) hingegen zeigt wiederum die Phasen aufgeschlüsselt nach ihrer Größe, und zwar BSmax (punktstrichlierte Linie), der mittleren BSmid (durchgezogene Linie) und der kleinsten BSmin (gestrichelte Linie). Der von der Kreuzvergleichseinheit 8 berechnete Wert für die Phasenverschiebung ist in die in den Diagramm e) für den netzseitigen Wechselrichter 31 und f) für den generatorseitigen Wechselrichter 32 dargestellt. Da in der linken Bildhälfte der netzseitige Wechselrichter 31 die größere Spannung aufweist, werden seine Werte nicht verschoben. Es gibt daher kein Shift-Signal für ihn. Das Shift-Signal gilt allein für den generatorseitigen Wechselrichter 32, wie in Diagramm f) dargestellt.

Anders stellt sich dies für den anderen Betriebsfall da, der in der rechten Bildhälfte dargestellt ist. Hier ist die Spannung des generatorseitigen Wechselrichters 32 die größere. Dementsprechend wird dessen Signal nicht verschoben, sondern stattdessen erfolgt die Verschiebung bei dem netzseitigen Wechselrichter, wie in Diagramm e) dargestellt ist.

Damit erreicht die Erfindung mit einem Minimum an Eingriffen in die Umrichtersteuerung eine beträchtliche Verringerung der Gleichtaktspannung, und insbesondere der der daraus resultierenden Leistungsdichte für Störungen. Die Erfindung eignet sich besonders für die Anordnung bei Windenergieanlagen, die weit entfernt voneinander entfernte Generatoren und Umrichter aufweisen; sie eignet sich aber auch bei gemeinsamer Anordnung von Generator und Umrichter. Da lediglich Modifizierungen in der Umrichtersteuerung erforderlich sind, eignet sich die Erfindung insbesondere auch zur Nachrüstung bestehender Windenergieanlagen.

## Patentansprüche

1. Windenergieanlage mit einem Generator (14) in einer Gondel (11), der von einem Windrotor (12) angetrieben ist, und einem Umrichter (3), der mit dem Generator (14) zusammenwirkt zur Erzeugung elektrischer Leistung, einer Verbindungsleitung (15) zwischen Generator (14) in der Gondel (11) und dem Umrichter (3), wobei der Umrichter (3) einen netzseitigen und einen generatorseitigen Wechselrichter (31, 32) umfasst, deren Stromventilen (35, 36) mittels einer Schaltfrequenz zyklisch angesteuert sind,
**dadurch gekennzeichnet, dass**
ferner vorgesehen sind ein mit beiden Wechselrichtern (31, 32) synchroner Träger zur Ansteuerung der Stromventile (35, 36) mit jeweils einer Zyklenlage,
ein Relativlage-Detektor (5), der dazu ausgebildet ist, die Zyklenlage für beide Wechselrichter (31, 32) zu ermitteln und deren relative Lage zueinander zu bestimmen, und ein Zyklenlageschieber (6), der mit dem Relativlage-Detektor (5) zusammenwirkt und ausgebildet ist zur Verschiebung der Zyklenlage zumindest eines der Wechselrichter (31, 32) abhängig von der ermittelten relativen Lage.

2. Windenergieanlage nach Anspruch 1, **dadurch gekennzeichnet, dass** der Umrichter (3) gondelfern an der Windenergieanlage angeordnet ist.

3. Windenergieanlage nach Anspruch 1 oder 2, **dadurch gekennzeichnet, dass** der Relativlage-Detektor (5) dazu ausgebildet ist, den Zyklenlageschieber (6) nur dann anzusteuern, wenn die Relativlage außerhalb eines Intervalls ist.

4. Windenergieanlage nach Anspruch 3, **dadurch gekennzeichnet, dass** Grenzen des Intervalls dynamisch sind.

5. Windenergieanlage nach einem der vorangehenden Ansprüche, **dadurch gekennzeichnet, dass** ferner ein Selektor (65) vorgesehen ist, der einen der beiden Wechselrichter (31, 32) bestimmt, auf den der Zyklenlageschieber (6) wirkt.

6. Windenergieanlage nach Anspruch 5, **dadurch gekennzeichnet, dass** der Selektor (65) belastungsgesteuert ist, vorzugsweise so ausgebildet ist, den Wechselrichter (31, 32) mit dem niedrigeren Belastungsmaß auszuwählen, wobei weiter vorzugsweise als Belastungsmaß die Spannung und/oder die Dauer des Intervalls fungiert.

7. Windenergieanlage nach einem der vorangehenden Ansprüche, **dadurch gekennzeichnet, dass** der Relativlage-Detektor (5) eine Phasensortiereinheit (6) aufweist, der vorzugsweise dazu ausgebildet ist, die Phasen der Wechselrichter (31, 32) nach ihrer Amplitude zu sortieren.

8. Windenergieanlage nach einem der vorangehenden Ansprüche, **dadurch gekennzeichnet, dass** der Relativlage-Detektor (5) eine Kreuzvergleichseinheit (7) aufweist, die dazu ausgebildet ist, die Phasen der Wechselrichter (31, 32) über Kreuz zu vergleichen.

9. Windenergieanlage nach Anspruch 7 und 8, **dadurch gekennzeichnet, dass** ferner ein Intervallbildungsmodul (81, 82) vorgesehen ist, welche aus einer minimalen und einer maximalen Phase des Wechselrichters ein Intervall bestimmt.

10. Windenergieanlage nach Anspruch 9, **dadurch gekennzeichnet, dass** ferner ein Überdeckungsmodul (82, 84, 85) vorgesehen ist, welches dazu ausgebildet ist zu prüfen, ob ein mittlerer Phasenwert eines der beiden Wechselrichter in dem Intervall des anderen der beiden Wechselrichter liegt.

11. Windenergieanlage nach einem der Ansprüche 8 bis 10, **dadurch gekennzeichnet, dass** die Kreuzvergleichseinheit (7) und der Selektor (65) miteinander kombiniert sind.

12. Windenergieanlage nach einem der vorangehenden Ansprüche, **dadurch gekennzeichnet, dass** der Zyklenlageschieber (6) in Signallaufrichtung vor einem Pulsweitenmodulator (4) der Stromventile angeordnet ist.

13. Umrichter zur Nachrüstung einer Windenergieanlage mit einem Generator (14) in einer Gondel (11), der von einem Windrotor (12) angetrieben ist, wobei der Umrichter mit dem Generator (14) zusammenwirkt zur Erzeugung elektrischer Leistung, wobei der Umrichter (3) einen netzseitigen und einen generatorseitigen Wechselrichter (31, 32) umfasst, deren Stromventilen (35, 36) mittels einer Schaltfrequenz zyklisch angesteuert sind,
**dadurch gekennzeichnet, dass**
ferner vorgesehen sind ein mit beiden Wechselrichtern (31, 32) synchronen Träger zur Ansteuerung der Stromventile (35, 36) mit jeweils einer Zyklenlage,
ein Relativlage-Detektor (5), der dazu ausgebildet ist, die Zyklenlage für beide Wechselrichter (31, 32) zu ermitteln und deren relative Lage zueinander zu bestimmen, und ein Zyklenlageschieber (6), der mit dem Relativlage-Detektor (5) zusammenwirkt und ausgebildet ist zur Verschiebung der Zyklenlage zumindest eines der Wechselrichter (31, 32) abhängig von der ermittelten relativen Lage.

14. Umrichter nach Anspruch 13, **dadurch gekennzeichnet, dass** er nach einem der Ansprüche 2 bis 12 weitergebildet ist.

15. Verfahren zum Betreiben einer Windenergieanlage, die einen Generator in einer Gondel, der von einem Windrotor angetrieben ist, einen Umrichter, der mit dem Generator zusammenwirkt zur Erzeugung elektrischer Leistung, und eine Verbindungsleitung zwischen Generator in der Gondel und dem Umrichter aufweist, wobei der Umrichter einen generatorseitigen und einen netzseitigen Wechselrichter mit Stromventilen umfasst, deren Stromventile mit einer Schaltfrequenz zyklisch angesteuert werden,
**gekennzeichnet durch**
synchrones Ansteuern der Stromventile beider Wechselrichtern mit jeweils einer Zyklenlage,
Detektieren einer Relativlage umfassen ein Ermitteln der Zyklenlage beider Wechselrichter und ein Bestimmen einer relative Lage der Zyklenlagen, und
Schieben der Zyklenlage eines der Wechselrichter abhängig von der ermittelten relativen Lage.

16. Verfahren nach Anspruch 15, **gekennzeichnet durch** Verschieben nur der Zyklenlage des Wechselrichters mit niedrigerer Spannung.

17. Verfahren nach Anspruch 15, **gekennzeichnet durch** Betreiben des Umrichters nach einem der Ansprüche 1 bis 11.
